# EUROPEAN PATENT APPLICATION

(11) **EP 2 746 620 A1**
(43) Date of publication of application: **25.06.2014**
(21) Application number: 12197673.2
(22) Date of filing: 18.12.2012
(51) Int. Cl.: F16H 55/30, B62M 9/10

(54) **Sprocket wheel for bicycle**

(71) Applicant: Lin, Chang Hui, Province of China (TW)
(72) Inventor: Lin, Chang Hui, Province of China (TW)
(74) Representative: Beck & Rössig European Patent Attorneys

(57) **Abstract**

A sprocket wheel includes a number of supporting devices (3) each having two protrusions (30) extended radially and inwardly from the rim (11) and offset from a center portion of the rim (11), and each protrusion (30) include a number of levers (31) for forming a number of spaces (32) between the levers (31) and include an inner end portion (35) having an orifice (33), the inner end portions (35) of the protrusions (30) of each supporting device (3) are contact with each other, and the protrusions (30) of the supporting devices (3) are arranged in a stagger way relative to each other for increasing the strength of the sprocket wheel and for dissipating the force to be applied to the sprocket wheel (10).

## Description

The invention relates to a sprocket wheel including an increasing strength for dissipating the force to the sprocket wheel.

Typical sprocket wheels comprise a number of outer teeth, and an inner portion attached to the wheel hub for engaging with chains.

However, the sprocket wheels are planar having a less strength that may not dissipate the force applied to the sprocket wheel.

The invention is to provide a sprocket wheel including an increasing strength for dissipating the force to be applied to the sprocket wheel.
Fig. 1 is a plan view of a sprocket wheel for a bicycle;
Fig. 2 is a perspective view of the sprocket wheel;
Fig. 3 is a plan view of the sprocket wheel;
Fig. 4 is a cross sectional view of the sprocket wheel; and
Fig. 5 is a partial exploded view of the sprocket wheel.

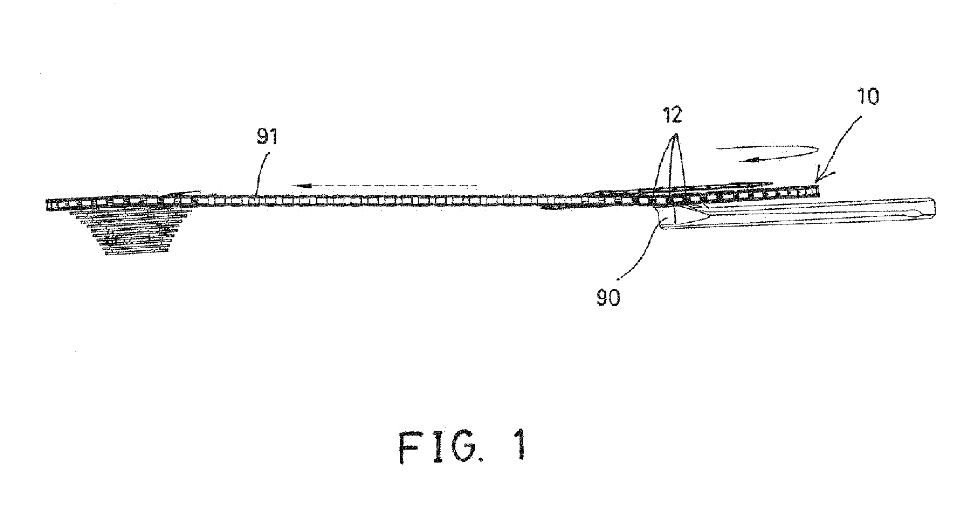

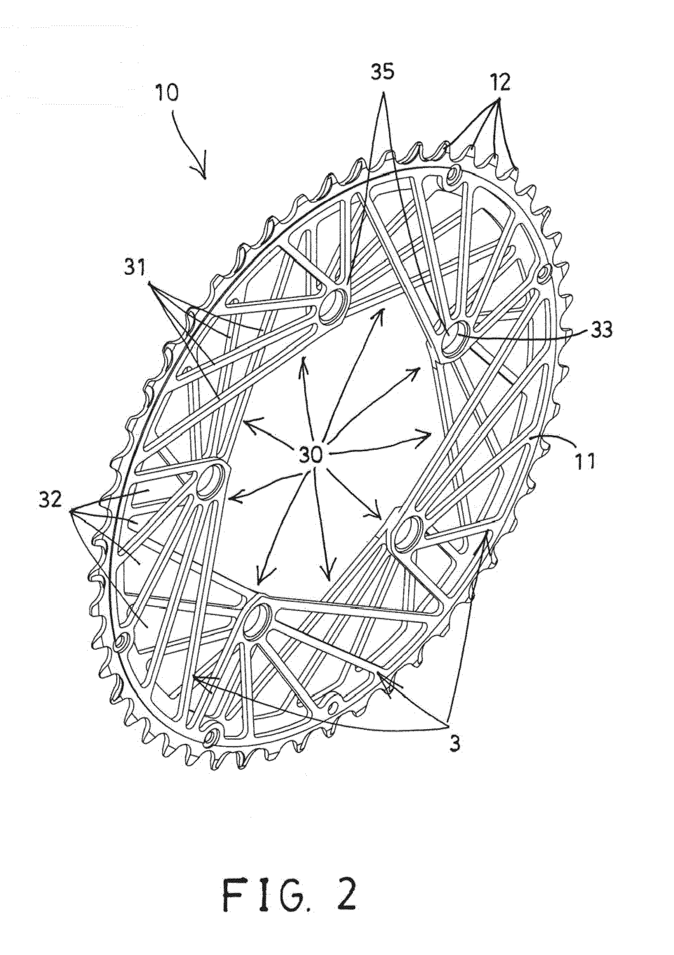

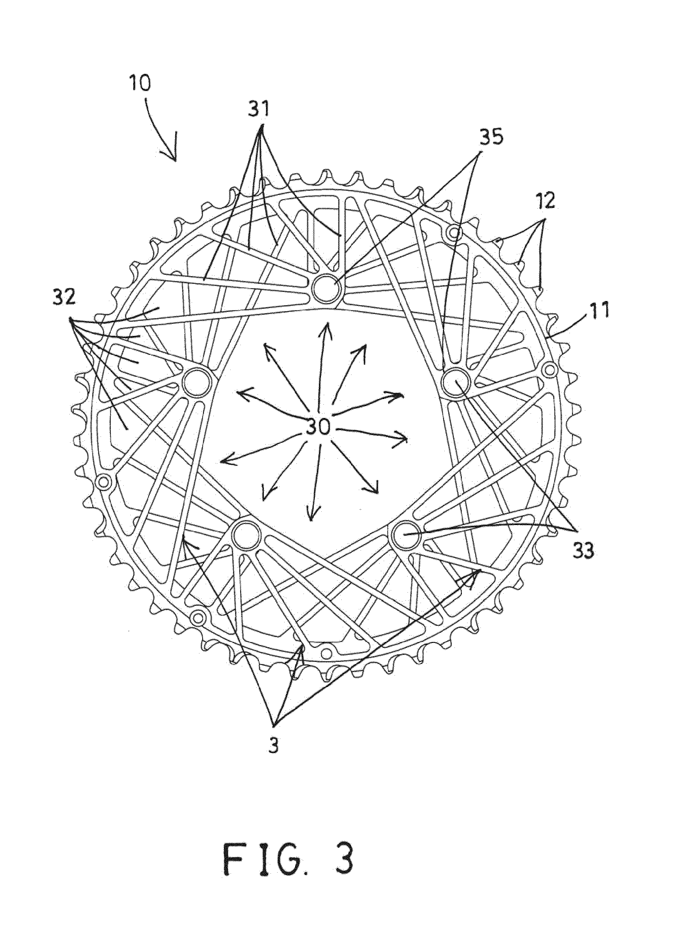

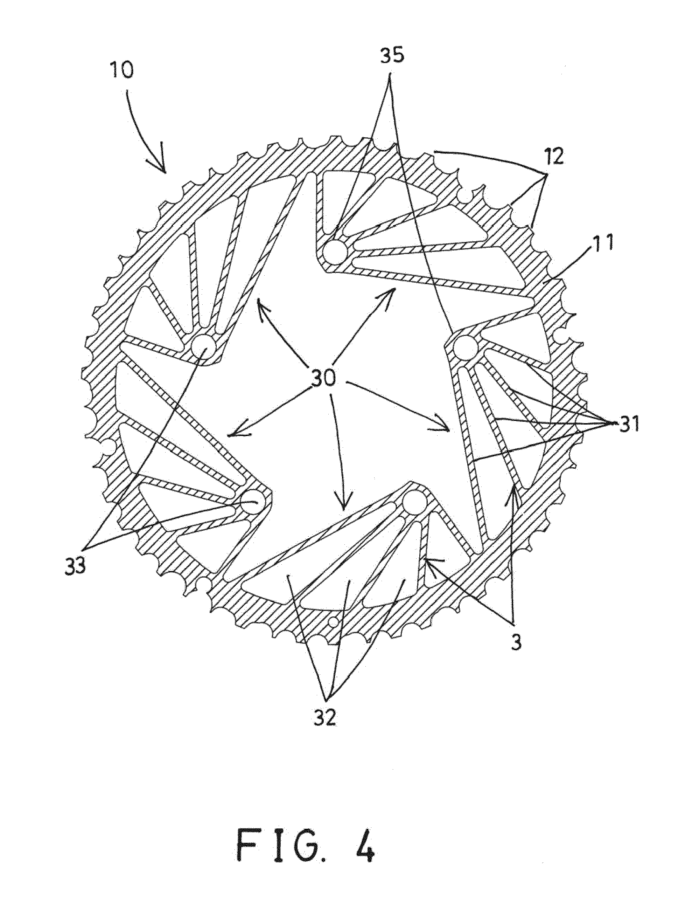

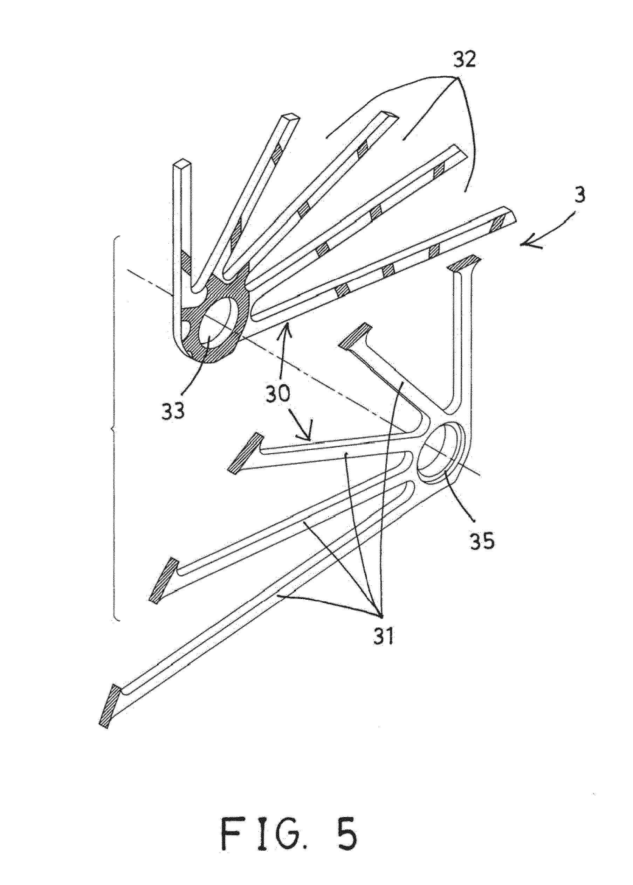

Referring to Fig. 1, a sprocket wheel 10 is to be attached to a wheel hub 90 for engaging with a chain 91, and comprises an outer peripheral rim 11 (Figs. 2-5) including a number of outer teeth 12, and a number of (such as five) supporting devices 3 attached to the inner portion of the rim 11. The supporting devices 3 each include two protrusions 30 extended radially and inwardly from the rim 11, but not extended toward the center of the rim 11, and each protrusion 30 include a number of levers 31 for forming a number of spaces 32 between the levers 31, and include an orifice 33 for securing to the wheel hub 90 of the bicycle.

The pair of protrusions 30 of each supporting device 3 are formed at opposite side, such as the front side and the rear side of the rim 11, and symmetric or mirror-symmetric to each other, and have an inner end portion 35 engaged with each other or formed integral with each other, and have the orifice 33 formed in the inner end portion 35, and the protrusions 30 are arranged in a stagger way relative to each other for dissipating the force to be applied to the sprocket wheel and for increasing the strength of the sprocket wheel 10. The protrusions 30 of each supporting device 3 may also not symmetric or mirror-symmetric to each other. The sprocket wheel 10 may be formed integral with a milling or machining procedure.

## Claims

1. A sprocket wheel comprising:
an outer peripheral rim (11) including a number of outer teeth (12), and
a number of supporting devices (3),
**characterized in that:**
the supporting devices (3) each include two protrusions (30) extended radially and inwardly from the rim (11) and offset from a center portion of the rim (11), and each protrusion (30) include a number of levers (31) for forming a number of spaces (32) between the levers (31) and include an inner end portion (35) having an orifice (33), the inner end portions (35) of the protrusions (30) of each supporting device (3) are contacted with each other, and the protrusions (30) of the supporting devices (3) are arranged in a stagger way relative to each other.

2. A sprocket wheel as claimed in claim 1, wherein the protrusions (30) of each supporting device (3) are symmetric to each other.

3. A sprocket wheel as claimed in claim 1, wherein the protrusions (30) of each supporting device (3) are mirror-symmetric to each other.

4. A sprocket wheel as claimed in one of claims 1 to 3, wherein the protrusions (30) of the supporting devices (3) are formed integral with each other.
